# EUROPEAN PATENT SPECIFICATION

(11) **EP 1 200 247 B1**
(45) Date of publication and mention of the grant of the patent: **01.10.2003**
(21) Application number: 00949217.4
(22) Date of filing: 27.06.2000
(51) Int. Cl.: B29D 30/24, B29D 30/32

(54) **TYRE ASSEMBLING APPARATUS**
REIFENAUFBAUTROMMEL
APPAREIL D'ASSEMBLAGE DES ELEMENTS D'UN PNEUMATIQUE

(30) Priority: 30.07.1999 EP 99830497; 22.09.1999 US 155129 P
(43) Date of publication of application: 02.05.2002
(73) Proprietor: PIRELLI PNEUMATICI Società per Azioni, 20126 Milano (IT)
(72) Inventor: SALA, Adamo, I-20041 Agrate Brianza (IT)
(74) Representative: Tansini, Elio Fabrizio
(86) International application number: EP0005972
(87) International publication number: WO01008874

(56) References cited:
- EP-A- 0 468 580
- WO-A-98/52740
- FR-A- 2 093 180
- FR-A- 2 372 693
- LU-A- 63 107
- US-A- 3 990 931

## Description

The present invention relates to a tyre assembling apparatus, comprising:
- an assembling drum having first and second halves that are axially opposed along a geometric axis of the drum itself, each of said halves comprising a plurality of circumferentially distributed radial sectors;
- radial-movement devices associated with each of said halves to selectively translate the corresponding sectors between a contracted condition in which they are disposed closer to the geometric axis of the drum and an expanded condition in which they are disposed spaced apart from the geometric axis of the drum;
- at least one axial-movement actuator to translate said halves relative to each other, between a condition in which they are moved close to each other and a condition in which they are moved apart from each other along the geometric axis of the drum.

As far as tyre manufacture for vehicle wheels is concerned, a so-called carcass sleeve is provided to be first made, which carcass sleeve is formed by winding up one or more carcass plies on a cylindrical drum.

Fitted on the side edges of the carcass ply or plies disposed in a cylindrical configuration are respective annular anchoring structures, each of them being usually made up of a so-called "bead wire" associated with an elastomer filling and intended for being incorporated into regions usually identified as "beads", formed from a turning-up action carried out on the side edges of the plies around the anchoring structures themselves.

Tyre manufacture also involves formation of a so-called belt package comprising one or more belt layers of textile and/or metallic material, with which a tread band is associated, at a radially outer position thereof. The belt package with the tread band is coaxially disposed around the carcass sleeve, and afterwards the carcass ply or plies are shaped in a toroidal configuration by mutual axial approaching of the tyre beads and simultaneous admission of fluid under pressure to the inside of the carcass sleeve so as to determine application of the belt package and tread band to the tyre carcass structure at a radially outer position thereof.

Several different apparata have been developed and proposed for carrying out the above described operations at least partly.

For example, Italian Patent Application No. 25594 A/81 in the name of the same Applicant, describes an apparatus comprising an assembling drum made up of a plurality of radially expandable sectors to impose such an expansion to the carcass sleeve that engagement of the bead wires against the carcass plies is caused. Each sector has two side portions that are axially movable relative to a central portion, capable of enabling the cords forming the carcass ply or plies to be conveniently shaped around the radially inner portion of each bead wire. The carcass sleeve thus made lends itself to be transferred to a second assembling drum, where turning up of the side edges of the carcass plies around the annular anchoring structures will be carried out, as well as application of the belt package with the tread band.
In document US-4,362,592 it is provided that the carcass sleeve formed on the assembling drum should have its side edges axially projecting in a cantilevered fashion from the drum side edges. In the proximitty of the opposite sides of the drum is a pair of turning-up devices each comprising a plurality of levers circumferentially distributed around the geometric axis of the drum and movable towards the latter to carry out turning-up of the side edges of the carcass sleeve around the anchoring structures to the beads. In particular, the levers of each turning-up device are axially movable towards the drum starting from a rest condition in which they have an orientation converging towards the geometric axis of the drum itself. In a starting step of the movement, spreading apart of the levers is caused by effect of a guide surface of truncated conical form acting on abutment rollers associated with the levers themselves at a median point of their longitudinal extension. In a second step of the displacement, each lever acts by its free end on the side edge of the sleeve causing turning-up of same. The lever action on the side edge takes place through a spring extending according to a closed line passing through the free ends of all levers. A second spring circumscribing the levers in a median plane of the longitudinal extension of same ensures their coming back to the rest position. The sleeve thus made must be transferred to a further apparatus where application of the belt package and the tread band will be carried out.

Italian Patent Application No. 20467 A/82 in the name of the same Applicant herein mentioned as an example of the most pertinent state of the art, contemplates use of an assembling drum comprising first and second halves to be mutually moved close to each other along the geometric axis of the drum. Each half has respective radially-expandable sectors, each defining a holding member made up of an axially inner portion and an axially outer portion to be moved close to each other in an axial direction to define an engagement seat for the bead wires associated with the carcass sleeve previously formed in another work station.
When engagement has occurred, the first and second halves of the assembling drum are moved close to each other so as to shape the carcass sleeve into a toroidal configuration, concurrently with inflation of air or other fluid thereinto.

In document US-3,887,423 a tyre manufacturing machine is described which has a drum essentially defined by a bladder expandable from a first operating condition, in which it is extended in a substantially cylindrical conformation, to a second operating condition in which it takes a toroidal conformation. A carcass sleeve is fitted on the drum in the first operating condition so that it projects from opposite sides past the drum by its side edges having a slightly smaller diameter than the maximum diameter of the drum itself. Two anchoring structures to the beads are placed on the carcass sleeve close to respective drum shoulders defined at the diametrical narrowing of the side edges of the carcass sleeve.

The side edges of the sleeve are disposed so as to bear on respective elastic tubular membranes within each of which a plurality of circumferentially-distributed levers operates, which levers are axially movable towards the drum to cause turning-up of the respective side edge around the annular anchoring structure, under the action of pressure rollers acting on the inner face of the membrane.

When turning-up is over, the drum and carcass sleeve take a toroidal conformation and the levers are operated again to determine application of the sidewalls previously laid down on the elastic membranes.

US 3,990,931 discolses a tyre assembling drum provided with pairs of pivotable arms journalled each at one end to a respective half of the drum, and joined each other at a pivoting connection laying in an equatorial plane. The pivotable arms are subjected to radially expand in the region of their mutual liking connection, when the halves approaches each other to conform the carcass tyre in a toroidal shape.

The present invention originates from the Applicant's perception that the present apparata for tyre assembling and related assembling method could be further improved, in particular in connection with the possibility of applying further components such as inserts of textile, metallic and/or elastomer materials to the region of the carcass sleeve included between the annular anchoring structures, which inserts are intended for interacting with the belt package to be associated with the carcass sleeve.

More specifically, application of said components could be carried out by means of devices such structured that they did not interfere with movement of the different drum parts during the step of shaping the carcass sleeve, thereby bringing about advantages on the quality of the finished product and the machinery productivity.

In more detail, it is an object of the present invention to provide a tyre assembling apparatus, wherein each of said sectors comprises: a holding member defining an engagement seat for an annular structure of anchoring to the bead being part of a carcass sleeve fitted on said drum; and a supporting member linked, relative to said holding member, in a position axially internal to the latter and movable between a first operating condition in which it is axially spaced apart from the holding member to offer a supporting seat to at least one ply being part of said carcass sleeve and a second operating condition in which it is disposed axially close to the holding member to enable mutual approaching of said halves, characterized in that the supporting members associated with the first and second halves respectively have abutment surfaces facing each other and spaced apart from each other by a smaller amount than the stroke carried out by said halves between their spaced apart condition and approaching condition, the supporting members abutting against each other by their respective abutment surfaces in the approaching condition.
In a preferential embodiment of the invention, it is advantageously provided that the supporting member should be slidably engaged along at least one guide rod extending in cantilevered fashion from said holding member.

In more detail, it is conveniently provided for the guide rod to extend in parallel to the geometric axis of the assembling drum. In addition, at least one elastic return member may be advantageously provided to be operatively associated with the supporting member to elastically urge it away from the holding member.

For instance, this elastic return member may comprise at least a return spring associated with said guide rod.

Under this circumstance, each of said supporting members is susceptible of being translated towards the respective holding member following a thrust action against at least one of the supporting members associated with the other half during mutual axial approaching of said halves.

Advantageously, the guide rods of the supporting members associated with the first half are angularly offset relative to the guide rods of the supporting members associated with the second half, so as to avoid mutual interferences between the rods themselves when the first and second halves are moved close to each other.
In accordance with a further preferential feature of the present invention, the supporting members associated with each of said halves, under a radially-expanded condition define a substantially continuous cylindrical surface.

For the purpose, it is preferably provided that each of said supporting members should have end slots slidably housing end projections provided on the circumferentially adjoining supporting members.

In a preferential embodiment, each of said holding members comprises an axially inner portion and an axially outer portion selectively movable, independently of each other, under the action of the radial-movement devices.

The radial-movement devices preferably comprise, for each of the halves of the assembling drum: a supporting hub coaxial with the geometric axis of the drum, slidably engaging the holding members of the respective sectors in a radial direction to said geometric axis; at least one radial-movement actuator operatively in engagement with said supporting hub and axially movable relative thereto; transmission connecting rods each operatively engaged between the radial-movement actuator and the holding member of one of said sectors to give rise to a radial movement of the holding member following an axial movement transmitted by said radial-movement actuator.
In more detail, said radial-movement devices may be advantageously provided to comprise, for each of the assembling drum halves: a supporting hub coaxial with the geometric axis of the drum; first guide elements for slidably engaging the axially inner portions of the holding members with the supporting hub, in a radial direction to said geometrical axis; at least one first radial-movement actuator operatively in engagement with said supporting hub and axially movable relative thereto; first transmission connecting rods each operatively engaged between the first radial-movement actuator and one of said axially inner portions to give rise to a radial movement of said one radially inner portion following an axial movement transmitted by said first radial-movement actuator; second guide elements for slidable engagement of the axially outer portions of the holding members with the supporting hub, in a radial direction to said geometric axis; at least one second radial-movement actuator operatively in engagement with said supporting hub and axially movable relative thereto; second transmission connecting rods each operatively engaged between the second radial-movement actuator and one of said axially outer portions to give rise to a radial movement of said one axially outer portion following an axial movement transmitted by said second radial-movement actuator.

It may be also advantageously provided that in the radial sectors of each of said first and second halves, powered axially inner portion operated by said radial-movement devices and driven axially inner portions dragged along in the radial movement of the powered axially inner portions, should be identified.

In accordance with a further aspect of the present invention, at least a turning-up device is advantageously provided to be associated with each of said first and second halves, to turn up a side edge of the carcass sleeve around the respective annular anchoring structure. Advantageously, each turning-up device comprises: a plurality of turning-up levers circumferentially distributed around the geometric axis of the drum, each carrying a pressure element facing the drum; at least one driving member rotatably engaging each of said turning-up levers at a point spaced apart from said pressure element; operation devices to axially translate the driving member between a rest position in which it is axially spaced apart from the radial sectors of the drum and a work position in which it is disposed close to said radial sectors.

In a preferential embodiment, the hinging point of each of said turning-up levers on the driving member has, relative to the geometric axis of the drum, a radial distance smaller than the radial distance measurable on the corresponding pressure element when the driving member is in its rest position.

In addition, the holding member of each sector is advantageously provided to have, at an axially outer position relative to the drum, a lead-in surface converging towards the geometric axis of the drum and facing the pressure element carried by at least one of said turning-up levers.

Preferably, each turning-up device further comprises at least one elastic element extending around the geometric axis of the drum and operating on said turning-up levers to transmit to the latter a radial-thrust action towards the geometric axis of the drum itself.

Further features and advantages will become more apparent from the detailed description of a preferred but non-exclusive embodiment of a tyre assembling apparatus in accordance with the present invention. This description will be taken hereinafter with reference to the accompanying drawings, given by way of non-limiting example, in which:
- Fig. 1 is an axial half section of the apparatus of the present inventio, under rest conditions;
- Fig. 2 shows the apparatus of Fig. 1 in an operating condition in which a carcass sleeve has been coaxially fitted onto the assembling drum;
- Fig. 3 is a partial section of the apparatus in an operating condition in which the axially inner portions of the holding members being part of the drum sectors have been radially spaced apart to engage the carcass sleeve;
- Fig. 4 shows the apparatus in a step subsequent to Fig. 3, in which engagement of the carcass sleeve has been completed, following the radial expansion of the axially outer portions of the drum sectors, and lying down of under-belt strips onto the carcass sleeve has been carried out;
- Fig. 5 shows a further operating step in which the carcass sleeve has taken a toroidal conformation, following mutual approach of the anchoring structures to the beads, and coupling between a belt package with a tread band on the carcass sleeve has been carried out;
- Fig. 6 shows an operating step in which turning-up of the sidewalls and side edges of the carcass sleeve around the annular anchoring structures to the beads is being carried out;
- Fig. 7 shows, in a partly interrupted diametrical section, the axially inner portions of the holding members of the sectors of one of the drum portions, under a retracted condition;
- Fig. 8 shows the axially inner portions of the holding members in an expanded condition;

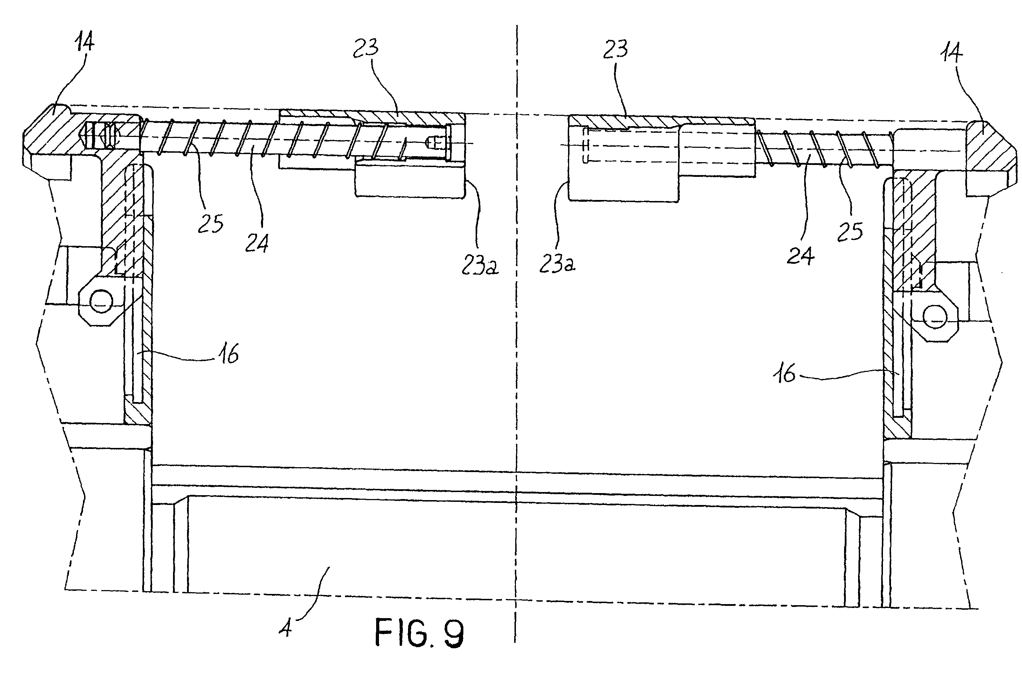

- Fig. 9 shows in an axial section, the supporting portions associated with the radial sectors of the drum, the drum halves being spaced apart from each other;
- Fig. 10 shows the supporting portions of Fig. 8 with the drum halves in a mutual-approaching condition;
- Fig. 11 is an elevational partial view showing the mutual engagement between circumferentially contiguous supporting members being part of the radial sectors of the assembling drum.

With reference to the cited drawings, a tyre assembling apparatus in accordance with the present invention has been generally identified by reference sign 1.

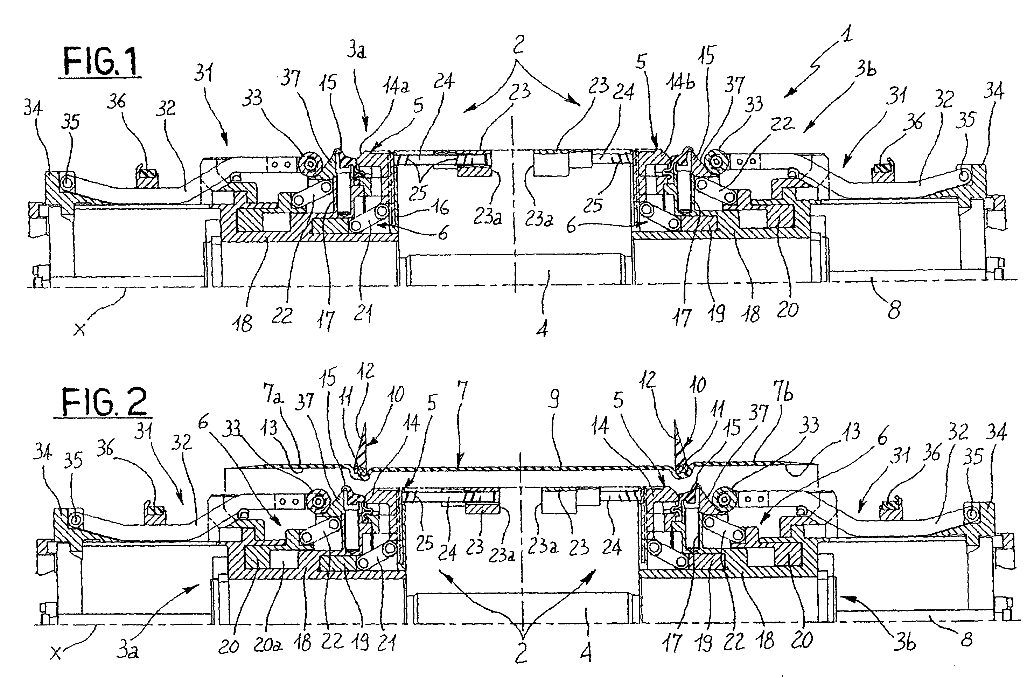

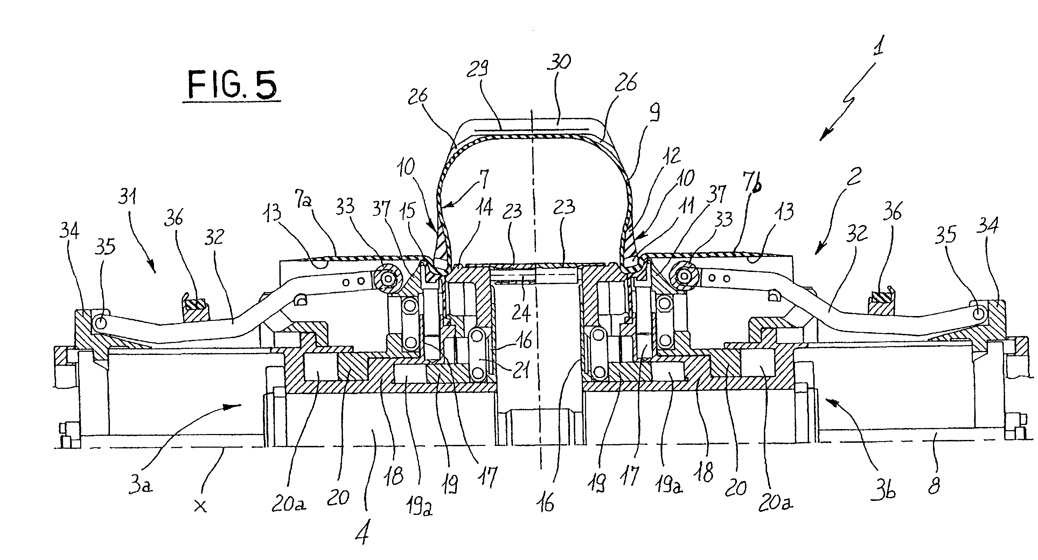

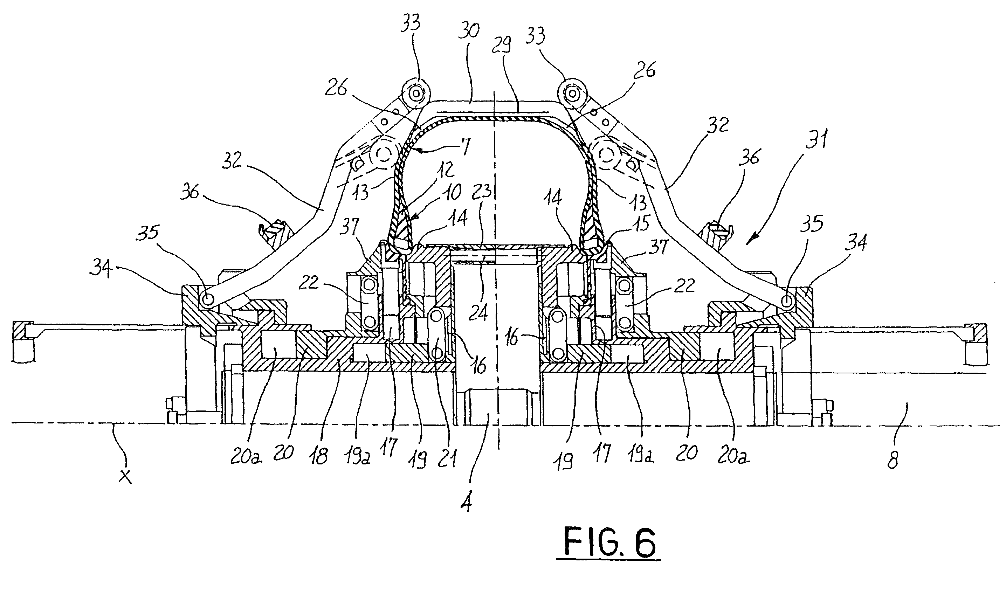

Apparatus 1 comprises an assembling drum 2 having first and second halves 3a, 3b axially opposed along a geometric axis X of the drum itself and susceptible of simultaneous translation, along geometric axis X, between a mutually spaced apart condition, shown in Figs. 1 and 2 for example, and a mutually approached condition, shown in Figs. 5 and 6 for example, upon command of at least one axial-movement actuator 4.

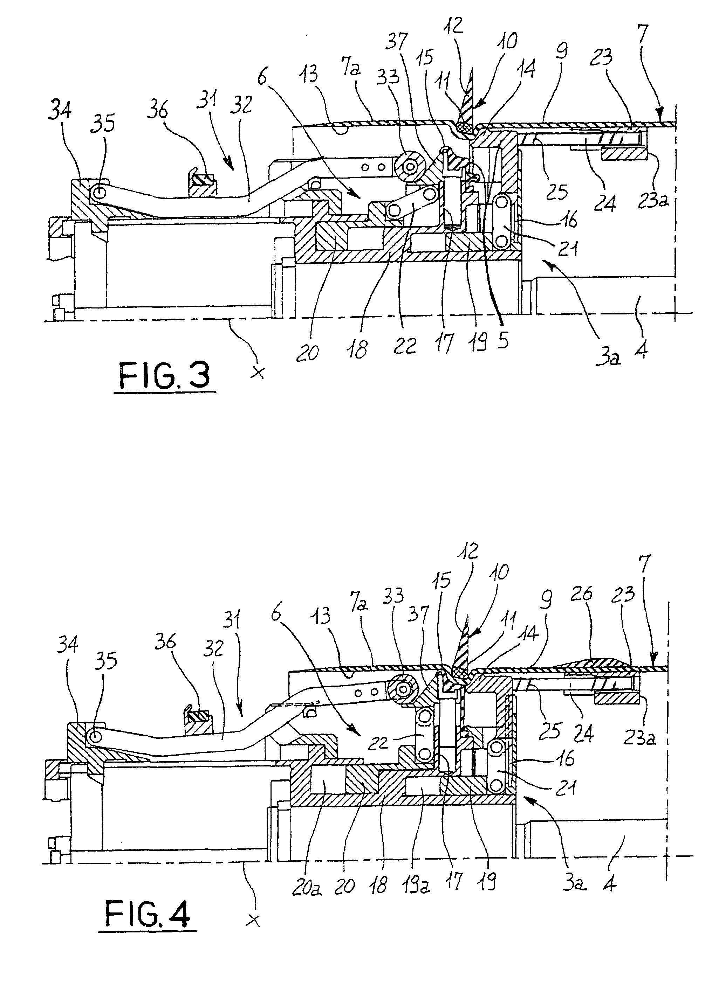

Each of halves 3a, 3b comprises a plurality of radial sectors 5 circumferentially distributed around geometric axis X and susceptible of translation, upon command of radial-movement devices generally denoted by reference sign 6, between a contracted condition in which, as shown in Fig. 1, they are approached to geometric axis X and an expanded condition in which, as shown in Fig. 4 d for example, they are radially spaced apart from the geometric axis itself.

Assembling drum 2 is adapted to receive a carcass sleeve 7 previously formed in a cylindrical conformation during a preceding working step. This carcass sleeve 7 may for example comprise one or more carcass plies 9 disposed in a cylindrical conformation, and a pair of anchoring structures to beads 10 each essentially comprising at least one so-called bead wire 11 provided with an elastomer filling 12 at a radially outer position relative to said bead wire 11.
Additional components may be previously applied to the inner surface of carcass ply or plies 9, which components may be for example at least one layer of raw elastomer material, adapted to form a so-called "liner" for example, and extending until close to annular anchoring structures 10, a pair of strips of elastomer material adapted to constitute tyre side walls 13, applied to respective side edges 7a, 7b of sleeve 7, as well as possible textile or metallic reinforcing strips placed at the overlapping region between the liner and each of the above-mentioned side walls.

As shown in Fig. 2, carcass sleeve 7, engaged on the outer surface of a first transfer ring (not shown), technically defined as first-step transfer, can be coaxially fitted on assembling drum 2, supported in cantilevered fashion at a central shaft 8 and such arranged that halves 3a and 3b are mutually spaced apart and radial sectors 5 are in the contracted condition, as shown in Fig. 1.

Once positioning of carcass sleeve 7 on assembling drum 2 has been carried out, radial sectors 5 of the latter are brought to the expanded condition to firmly hold the sleeve itself close to annular anchoring structures 10 (Fig. 3).

In more detail, for the purpose it is provided for each radial sector 5 to have a holding member 14, 15 (Fig. 2) defining a seat for engagement of sleeve 7 close to one of annular anchoring structures 10. This holding member 14, 15 preferably comprises an axially inner portion 14 and an axially outer portion 15, selectively movable, independently of each other, under the action of radial-movement devices 6.
For this purpose, radial-movement devices 6 advantageously comprise first and second guide elements 16, 17 (Fig. 2) by means of which axially inner portion 14 and axially outer portion 15 are slidably in engagement, in a direction radial to geometric axis X, with a supporting hub 18 coaxial with the geometric axis itself. Operatively engaged in supporting hub 18 are at least a first and a second radial-movement actuators 19, 20 (Fig. 2), of annular conformation for example, axially movable relative to the hub itself, under the action of a working fluid admitted to respective annular chambers 19a, 20a.

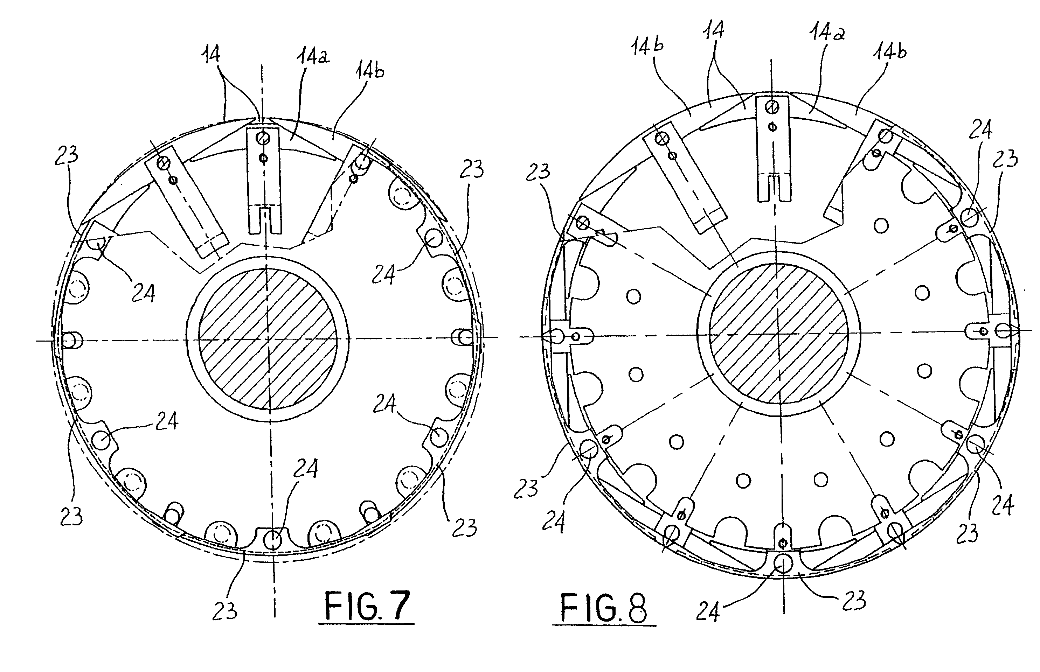

Also provided are first transmission connecting rods 21 each engaged between first radial-movement actuator 19 and one of axially inner portions 14, as well as second transmission connecting rods 22 each engaged between second radial-movement actuator 20 and one of axially outer portions 15. Each of first and second transmission connecting rods 21, 22 lends itself to cause a radial movement of respective axially inner 14 or outer 15 portions, following an axial movement transmitted by first and second radial movement actuators 19, 20, respectively.
It may be advantageously provided that in the plurality of axially inner portions 14 of radial sectors 5 belonging to each of halves 3a and 3b of drum 2, powered axially inner portions and driven axially inner portions following each other in an alternated sequence along the circumferential extension of the drum itself should be identified. Said powered and driven axially inner portions have been denoted by 14a and 14b respectively in Figs. 1, 7 and 8. As shown in Fig. 1, powered axially inner portions 14a are directly submitted to the action of radial movement devices 6, by means of respective first transmission connecting rods 21, whereas driven axially inner portions 14b are dragged along in the radial movement imposed to operated axially inner portions 14a. The dragging action preferably takes place by means of mutually mating sliding surfaces respectively associated with powered 14a and driven 14b axially inner portions, as clearly shown in Figs. 7 and 8.

The operating sequence for engaging sleeve 2 by means of holding members 14, 15 first contemplates operation of first radial-movement actuators 19 to cause radial expansion of axially inner portions 14 of each sector 5. Under this situation, as shown in Fig. 3, radially inner portions 14 engage carcass sleeve 7 close to the axially inner regions of annular anchoring structures 10. It may be provided that the radial expansion of radially-inner portions 14 should be followed by a slight mutual moving apart of halves 3, under the action of axial-movement actuator 4, to cause an appropriate tensioning of carcass plies 9 at the section included between annular anchoring structures 10. Next second radial-movement actuators 20 are operated to cause the radial expansion of axially outer portions 15, thereby completing engagement of carcass sleeve 7 by radial sectors 5 close to both annular anchoring structures 10 as shown in Fig. 4.
Advantageously, respective supporting members 23 are associated with radial sectors 5, said supporting members being placed at an axially inner position relative to respective holding members 14, 15. These supporting members 23 lend themselves to define, when sectors 5 are in a radial-expansion condition, at least one substantially continuous cylindrical surface so as to provide a supporting seat for carcass ply or plies 9 at the regions included between annular anchoring structures 10.

In more detail, each supporting member 23 is operatively connected to holding member 14, 15 of respective sector 5, and is movable between a first operating condition in which, as shown in Figs. 1 to 4, it is axially spaced apart from the holding member itself to provide a supporting seat for carcass ply 9, and a second operating condition in which, as shown in Figs. 5 and 6, it is axially approached to holding member 14, 15 to enable mutual approaching of halves 3a and 3b of drum 2. Preferably, supporting member 23 is slidably engaged along at least one guide rod 24 extending in cantilevered fashion from respective holding member 14, 15, parallelly of geometric axis X of assembling drum 2.

Associated with supporting member 23 is one or more elastic return elements constantly urging member 23 to a condition spaced apart from respective holding member 14, 15. In detail, in the example shown a return spring 25 (only partly illustrated) is provided for the purpose, which spring is coaxially disposed on guide rod 24. The support provided to carcass ply or plies 9 by supporting elements 23 makes it advantageously possible to apply to the region included between annular anchoring structures 10 of carcass sleeve 7, extended in a cylindrical conformation, one or more additional elements to be integrated into the tyre structure. These additional elements may comprise filling and/or reinforcing ribbon-like elements 26, the so-called "under-belt strips" for example (Fig. 4), intended for being incorporated under the side edges of a belt package, close to the tyre shoulders. In particular, it is possible to carry out application of these ribbon-like elements by a winding action and a simultaneous rolling action around geometric axis X of drum 2, while the latter is being driven in rotation, without the risk that stresses and/or anomalous deformations be produced on the carcass plies.

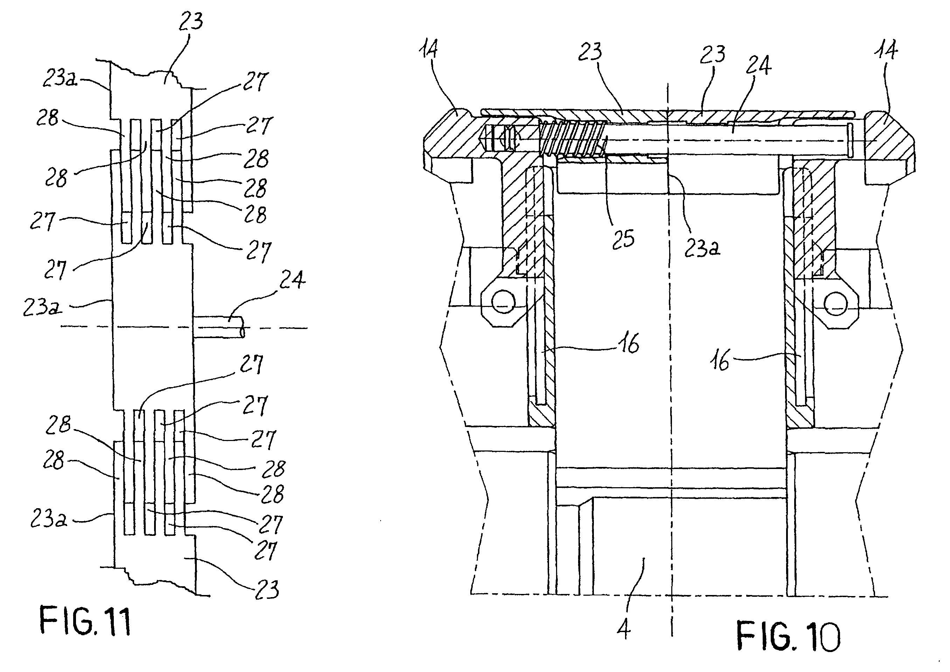

In order to provide carcass ply or plies 9 with a supporting surface as much as possible continuous and homogeneous, each of supporting members 23 is advantageously provided with end slots 27 which slidably house end projections 28, mating with said slots and provided on circumferentially contiguous supporting members 23, as clearly shown in Fig. 11.

When application of ribbon-like elements 26 has been completed, assembling drum 2 is moved to a different working station for shaping and completing the tyre carcass structure. During said displacement the toroidal conformation of carcass sleeve 7 begins by mutual approaching of halves 3a and 3b, concurrently with air or other working fluid admission to the inside of carcass sleeve 7, in such a manner that said sleeve takes a toroidal conformation of increasingly growing diameter. Once the sleeve has been positioned in said working station, it receives a so-called belt package 29 coupled with a tread band 30 disposed at a radially outer position of said belt package 29. Belt package 29, comprising one or more belt layers of textile and/or metallic material, and tread band 30 are obtained on a further drum (not shown), in a different station of the manufacturing machine, and positioned on carcass sleeve 7 with the aid of a second transfer ring (not shown) coaxially fitted on the drum. Said further drum and second transfer ring are not described in detail because they are not part of the present invention. Belt package 29 and tread band 30 are positioned at a centered location around carcass sleeve 7 by axial insertion on assembling drum 2 through said second transfer ring provided with grip members acting on the outer surface of the tread band itself. Conformation goes on until the radially outer surface of the carcass sleeve adheres to the radially inner surface of belt package 29 (as shown in Figs. 5 and 6). At this point the grip members of the second transfer ring are detached from the tread band surface and the transfer ring is moved away.

Supporting members 23, associated with first 3a and second 3b halves respectively, have abutment surfaces 23a facing each other and respectively moved apart from each other by an amount smaller than the stroke carried out by said halves when they translate from their mutually-spaced apart condition to their mutually-approached condition.

Consequently, during translation of halves 3a and 3b towards the mutual-approaching condition, supporting members 23 abut against each other by their respective abutment surfaces 23a. As axial mutual approaching of halves 3a and 3b goes on, each of supporting members 23 moves towards respective holding member 14, 15 and presses spring 25 fitted on guide rod 24, by effect of the thrust action mutually exchanged with one or more of supporting members 23 associated with the other half.
Advantageously, guide rods 24 of supporting members 23 associated with first half 3a are angularly offset relative to guide rods 24 of supporting members 23 associated with the other half 3b. In other words, guide rods 24 of supporting members 23 associated with one and the other halves 3a and 3b respectively, are angularly offset relative to each other around geometric axis X. Thus, any possibility of mutual interference between guide rods 24 when halves 3a and 3b are brought into mutual-approaching relationship is eliminated.

In accordance with a further aspect of the present invention, advantageously associated with first 3a and second 3b halves are respective turning-up devices 31, under the action of which side edges 7a, 7b of carcass sleeve 7 are turned up around respective annular anchoring structures 10, and more specifically around bead wires 11 of said structures, to complete tyre manufacturing.

Each turning-up device 31 comprises a plurality of turning-up levers 32 circumferentially distributed around geometric axis X of drum 2. In the accompanying drawings, one turning-up lever alone 32 for each of turning-up devices 31 is shown.

Each turning-up lever 32 substantially lies in a diametrical plane containing geometric axis X and carries, at one free end thereof, at least one pressure element 33, comprising a roller for example, which is turned towards the middle plane of drum 2, the rotation axis of said pressure element 33 being disposed parallelly of said middle plane and perpendicular to said diametrical plane. In more detail, each pressure element 33 is positioned close to one of radial sectors 5, at an axially outer position relative to holding member 14, 15 being part of the sector itself.
Each turning-up device 31 further comprises at least one driving member 34 rotatably engaging each of turning-up levers 32 at a second end thereof or at another hinging point 35 spaced apart from pressure element 33. This driving member 34 can be activated by an operation device comprising a fluid-operated actuator for example, which is coaxially housed in drum 2 and not shown because it can be made in any convenient manner, which actuator causes the driving member to axially translate from a rest position in which, as shown in Figs. 1 to 5, it is spaced apart from radial sectors 5 belonging to the respective half, and a working position in which, as shown in Fig. 6, it is disposed axially close to said radial sectors.

As clearly shown in Fig. 6, following translation of driving members 34 to the working position, turning-up levers 32 progressively slant while rotating around their hinging points 35, and respective pressure elements 33 cause turning-up of side edges 7a, 7b around anchoring structures 10, radially travelling along tyre side walls 13 away from geometric axis X until they reach tread band 30.

The above-described movement takes place against the action of at least one elastic element 36, consisting of an elastomeric ring for example, extending around geometric axis X and operating on turning-up levers 32 to transmit to said levers a radial thrust action towards the geometric axis itself. Due to the presence of this elastic element 36 a homogeneous thrust action of pressure elements 33 against respective tyre side wall 13 is ensured and a simultaneous movement of the levers themselves during both the going stroke and return stroke to the rest position is promoted.
It is advantageously provided that, when the driving member 34 is at its rest position, turning-up levers 32 preferably extend in the form of a broken line substantially diverging from geometric axis X at radial sectors 5, as shown in Figs. 1 to 5. Hinging point 35 of each of turning-up levers 32 consequently has a radial distance, relative to geometric axis X, which is smaller than the radial distance measured on corresponding pressure element 33.

It is also preferably provided that radial sectors 5, at an axially outer position, should have respective lead-in surfaces 37 converging towards geometric axis X and facing pressure elements 33. In detail, lead-in surfaces 37 are preferably formed on the axially outer positions of holding members 14, 15 being part of respective radial sectors 5.

Orientation of turning-up levers 32, as well as the presence of lead-in surfaces 37 are favourable for reaching an excellent control on turning-up lever 32 movements, above all at the starting instants of translation of driving members 34 from the rest position. In particular, a slight displacement of the driving members from the rest position can be caused before the step of mutual approaching of halves 3a and 3b of drum 2 begins. Under this situation, pressure elements 33 are brought to a radially outer position relative to lead-in surfaces 37, causing an initial turning-up of side edges 7a, 7b around bead wires 11. Thus, there is eliminated the risk that the cords forming carcass ply or plies 9 may be submitted to undesirable displacements and/or anomalous stresses during the mutual approaching of halves 3a and 3b giving rise to the toroidal conformation of sleeve 7.

The present invention achieves important advantages.
In fact, the expedients proposed by the invention enable supporting members 23 to be arranged without the risk that the presence of said members may be a hindrance to a correct movement of each of halves 3a and 3b of drum 2, in particular during the step of mutual approaching of said halves for giving a toroidal conformation to carcass sleeve 7.

It should be also appreciated that, in spite of the presence of supporting members 23, apparatus 1 has a great structural simplicity, which results in advantages in terms of easy servicing and setting.

Moreover, the inclined orientation of turning-up levers 32 at their rest position too, in addition to the above-described advantages, enables the axial sizes of apparatus 2 as a whole to be advantageously reduced. It will be also recognized that since the turning-up levers have the conformation of a broken line, the risk that they may undesirably come into contact with the tyre, above all at the shoulder regions when pressure elements 33 operate on tread band 30, is eliminated,

In addition, lead-in surfaces 37 promote the starting contact of pressure elements 33 with the carcass side, enabling said elements to slide along said side in a uniform manner and without discontinuity.

## Claims

1. A tyre assembling apparatus, comprising:
- an assembling drum (2) having first (3a) and second (3b) halves that are axially opposed along a geometric axis (X) of the drum itself, each of said halves (3a, 3b) comprising a plurality of circumferentially distributed radial sectors (5);
- radial-movement devices (6) associated with each of said halves (3a, 3b) to selectively translate the corresponding sectors (5) between a contracted condition in which they are disposed closer to the geometric axis (X) of the drum (2) and an expanded condition in which they are disposed spaced apart from the geometric axis (X) of the drum (2);
- at least one axial-movement actuator (4) to translate said halves (3a, 3b) relative to each other, between an approaching condition in which they are close to each other and a spaced-apart condition in which they are spaced apart from each other along the geometric axis (X) of the drum (2) ;
each of said sectors (5) comprising:
- a holding member (14, 15) defining an engagement seat of an annular anchoring structure to the bead (10) being part of a carcass sleeve (7) fitted on said drum (2); and
- a supporting member (23) linked, relative to said holding member (14, 15), in a position axially internal to the latter and movable between a first operating condition in which it is axially spaced apart from the holding member to provide a supporting seat to at least one ply being part of said carcass sleeve (7) and a second operating condition in which it is disposed axially close to the holding member to enable mutual approaching of said halves (3a, 3b),
**characterized in that** the supporting members (23) associated with the first (3a) and second (3b) halves respectively, have abutment surfaces (23a) facing each other and spaced apart from each other respectively by an amount smaller than the stroke carried out by said halves between their spaced apart condition and approaching condition, the supporting members (23) abutting against each other by their respective abutment surfaces (23a) in the approaching condition.

2. Apparatus as claimed in claim 1, wherein said supporting member (23) is slidably engaged along at least one guide rod (24) extending in cantilevered fashion from said holding member (14, 15).

3. Apparatus as claimed in claim 2, wherein said guide rod (24) extends in parallel to the geometric axis (X) of the assembling drum (2).

4. Apparatus as claimed in claim 1, comprising at least one elastic return member (25) operatively associated with the supporting member (23) to elastically urge it away from the holding member (14, 15).

5. Apparatus as claimed in claim 2, comprising at least one return spring (25) associated with said guide rod (24) to elastically urge the supporting member (23) apart from the holding member (14, 15).

6. Apparatus as claimed in claim 2, wherein the guide rods (24) of the supporting members (23) associated with the first (3a) and second (3b) halves respectively, are angularly offset relative to each other.

7. Apparatus as claimed in claim 1, wherein the supporting members (23) of each of said halves (3a, 3b) are susceptible of being translated towards the respective holding members (14, 15) following a thrust action against the supporting members (23) associated with the other half during mutual axial approaching of said halves.

8. Apparatus as claimed in claim 1, wherein the supporting members (23) associated with each of said halves (3a, 3b), under a radially-expanded condition define a substantially continuous cylindrical supporting surface.

9. Apparatus as claimed in claim 1, wherein each of said supporting members (23) has end slots (27) slidably housing end projections (28) provided on the circumferentially adjoining supporting members (23).

10. Apparatus as claimed in claim 1, wherein each of said holding members (14, 15) comprises an axially inner portion (14) and an axially outer portion (15) movable selectively and independently of each other under the action of the radial-movement devices (6).

11. Apparatus as claimed in claim 1, wherein said radial-movement devices (6) comprise, for each of the halves (3a, 3b) of the assembling drum (2):
- a supporting hub (18) coaxial with the geometric axis (X) of the drum (2), slidably engaging the holding members (14, 15) of the respective sectors (5) in a radial direction to said geometric axis (X);
- at least one radial-movement actuator (19, 20) operatively in engagement with said supporting hub (18) and axially movable relative thereto;
transmission connecting rods (21, 22) each operatively engaged between the radial-movement actuator (19, 20) and the holding member (14, 15) of one of said radial sectors (5) to give rise to a radial movement of the holding member (14, 15) following an axial movement transmitted by said radial-movement actuator (19, 20).

12. Apparatus as claimed in claim 10, wherein said radial-movement devices (6) comprise, for each of the halves (3a, 3b) of the assembling drum (2):
- a supporting hub (18) coaxial with the geometric axis (X) of the drum (2);
- first guide elements (16) for slidably engaging the axially inner portions (14) of the holding members (14, 15) with the supporting hub (18), in a radial direction to said geometrical axis (X);
- at least one first radial-movement actuator (19) operatively in engagement with said supporting hub (18) and axially movable relative thereto;
- first transmission connecting rods (21), each operatively engaged between the first radial-movement actuator (19) and one of said axially inner portions (14) to give rise to a radial movement of said one radially inner portion following an axial movement transmitted by said first radial-movement actuator (19) ;
- second guide elements (17) for slidable engagement of the axially outer portions (15) of the holding members (14, 15) with the supporting hub (18), in a radial direction to said geometric axis (X);
- at least one second radial-movement actuator (20) operatively in engagement with said supporting hub (18) and axially movable relative thereto;
second transmission connecting rods (22) each operatively engaged between the second radial-movement actuator (20) and one of said axially outer portions (15) to give rise to a radial movement of said one axially outer portion following an axial movement transmitted by said second radial-movement actuator (20).

13. Apparatus as claimed in claim 12, wherein in the radial sectors (5) of each of said first (3a) and second (3b) halves, are present axially inner powered portions (14a) operated by said radial-movement devices and driven axially inner portions (14b) dragged along in the radial movement of the powered axially inner portions (14a).

14. Tyre assembling apparatus according to claim 1, wherein at least one turning-up device (31) is associated with each of said first (3a) and second (3b) halves, to turn up a side edge (7a, 7b) of the carcass sleeve (8) around the respective annular anchoring structure (10).

15. Apparatus as claimed in claim 14, wherein each turning-up device (31) comprises:
- a plurality of turning-up levers (32) circumferentially distributed around the geometric axis (X) of the drum (2), each carrying a pressure element (33) facing the drum (2);
- at least one driving member (34) rotatably engaging each of said turning-up levers (32) at a hinging point (35.) spaced apart from said pressure element (33) ;
- operation devices to axially translate the driving member (34) between a rest position in which it is axially spaced apart from the radial sectors (5) and a working position in which it is disposed close to said radial sectors.

16. Apparatus as claimed in claim 15, wherein the hinging point (35) of each of said turning-up levers (32) on the driving member (34) has, relative to the geometric axis (X) of the drum (2), a radial distance smaller than the radial distance measurable on the corresponding pressure element (33) when the driving member (34) is in its rest position.

17. Apparatus as claimed in claim 15, wherein the holding member (14, 15) of each radial sector (5) has, at an axially outer position, a lead-in surface (37) converging towards the geometric axis (X) of the drum (2) and facing the pressure element (33) carried by at least one of said turning-up levers (32).

18. Apparatus as claimed in claim 15, wherein each turning-up device (31) comprises at least one elastic element (36) extending around the geometric axis (X) of the drum (2) and operating on said turning-up levers (32) to transmit to the latter a radial-thrust action towards the geometric axis (X) or the drum itself.

## Patentansprüche

1. Reifenmontagevorrichtung
- mit einer Montagetrommel (2), die eine erste Hälfte (3a) und eine zweite Hälfte (3b) hat, die einander längs einer geometrischen Achse (X) der Trommel axial gegenüber liegen und von denen jede eine Vielzahl von am Umfang verteilten radialen Sektoren (5) aufweist,
- mit Radialbewegungsvorrichtungen (6), die jeder der Hälften (3a, 3b) zugeordnet sind, um die entsprechenden Sektoren (5) zwischen einem eingezogenen Zustand, in dem sie näher an der geometrischen Achse (X) der Trommel (2) angeordnet sind, und einem ausgefahrenen Zustand, in dem sie im Abstand von der geometrischen Achse (X) der Trommel (2) angeordnet sind, selektiv zu verschieben,
- mit wenigstens einer Axialbewegungs-Betätigungseinrichtung (4) zum Verschieben der Hälften (3a, 3b) bezüglich einander zwischen einem Annäherungszustand, in dem sie sich nahe beieinander befinden, und einem Abstandszustand, in dem sie voneinander längs der geometrischen Achse (X) der Trommel (2) beabstandet sind,
- wobei jeder der Sektoren (5)
-- ein Haltelement (14, 15), das einen Eingriffssitz eines ringförmigen Verankerungsaufbaus an dem Wulst (10) bildet, der Teil einer an der Trommel (2) festgelegten Karkassenhülse (2) ist, und
-- ein Abstützelement (23) aufweist, das bezüglich des Halteelements (14, 15) in einer Position axial innerhalb des letzteren angeschlossen und zwischen einem ersten Betriebszustand, in der es von dem Halteelement axial beanstandet ist, um einen Abstützsitz für wenigstens eine Lage zu bilden, die Teil der Karkassenhülse (7) ist, und einem zweiten Betriebszustand bewegbar ist, in dem es axial nahe bei dem Halteelement angeordnet ist, um eine gegenseitige Annäherung der Hälften (3a, 3b) zu ermöglichen,
**dadurch gekennzeichnet,**
- **dass** die Abstützelemente (23), die der ersten Hälfte (3a) beziehungsweise der zweiten Hälfte (3b) zugeordnet sind, Widerlagerflächen (23a) haben, die einander zugewandt und jeweils in einem Abstand voneinander angeordnet sind, der kleiner ist als der von den Hälften zwischen ihrem Abstandszustand und ihrem Annäherungszustand ausgeführte Hub,
- wobei die Abstützelemente (23) mit ihren jeweiligen Widerlagerflächen (23a) in dem Annäherungszustand aneinander anliegen.

2. Vorrichtung nach Anspruch 1, bei welcher das Abstützelement (23) längs wenigstens einer Führungsstange (24) in einem Gleiteingriff steht, die sich tragarmartig von dem Halteelement (14, 15) aus erstreckt.

3. Vorrichtung nach Anspruch 2, bei welcher sich die Führungsstange (24) parallel zu der geometrischen Achse (X) der Montagetrommel (2) erstreckt.

4. Vorrichtung nach Anspruch 1 mit wenigstens einem elastischen Rückführelement (25), das dem Abstützelement (23) funktionsmäßig zugeordnet ist, um es elastisch von dem Halteelement (14, 15) wegzudrücken.

5. Vorrichtung nach Anspruch 2, welche wenigstens eine Rückführfeder (25) aufweist, die der Führungsstange (24) zugeordnet ist, um das Abstützelement (23) elastisch von dem Halteelement (14, 15) beiseite zu drücken.

6. Vorrichtung nach Anspruch 2, bei welcher die Führungsstangen (24) der Abstützelemente (23), die der ersten Hälfte (3a) beziehungsweise der zweiten Hälfte (3b) zugeordnet sind, zueinander im Winkel versetzt sind.

7. Vorrichtung nach Anspruch 1, bei welcher die Abstützelemente (23) einer jeden Hälfte (3a, 3b) zu den entsprechenden Halteelementen (14, 15) aufgrund einer Schubwirkung gegen die der anderen Hälfte zugeordneten Abstützelemente (23) während der gegenseitigen axialen Annäherung der Hälften verschiebbar sind.

8. Vorrichtung nach Anspruch 1, bei welcher die jeder der Hälften (3a, 3b) zugeordneten Abstützelemente (23) im radial ausgefahrenen Zustand eine im wesentlichen durchgehende zylindrische Abstützfläche bilden.

9. Vorrichtung nach Anspruch 1, bei welcher jedes der Abstützelemente (23) Endschlitze (27) aufweist, die gleitend verschiebbar Endvorsprünge (28) aufnehmen, die an den am Umfang anschließenden Abstützelementen (23) vorgesehen sind.

10. Vorrichtung nach Anspruch 1, bei welcher jedes der Halteelemente (14, 15) einen axial inneren Teil (14) und einen axial äußeren Teil (15) hat, die selektiv und unabhängig voneinander unter der Einwirkung der Radialbewegungsvorrichtungen (6) bewegbar sind.

11. Vorrichtung nach Anspruch 1, bei welcher die Radialbewegungsvorrichtungen (6) für jede der Hälften (3a, 3b) der Montagetrommel (2)
- eine zur geometrischen Achse (X) der Trommel (2) koaxiale Abstütznabe (18), die in einem Gleitverschiebungseingriff mit den Halteelementen (14, 15) der entsprechenden Sektoren (5) in einer Radialrichtung der geometrischen Achse (X), steht,
- wenigstens eine Radialbewegungs-Betätigungseinrichtung (19, 20), die funktionsmäßig in Eingriff mit der Abstütznabe (18) steht und axial bezüglich dieser bewegbar ist, und
- Transmissionsverbindungsstangen (21, 22) aufweist, von denen jede funktionsmäßig zwischen der Radialbewegungs-Betätigungseinrichtung (19, 20) und dem Halteelement (14, 15) eines der radialen Sektoren (5) eingreift, um eine Radialbewegung des Halteelements (14, 15) aufgrund einer Axialbewegung herbeizuführen, die von der Radialbewegungs-Betätigungseinrichtung (19, 20) übertragen wird.

12. Vorrichtung nach Anspruch 10, bei welcher die Radialbewegungsvorrichtungen (6) für jede der Hälften (3a, 3b) der Montagetrommel (2)
- eine zur geometrischen Achse (X) der Trommel (2) koaxiale Abstütznabe (18),
- erste Führungselemente (16) für einen Gleiteingriff der axial inneren Teilen (14) der Haltelemente (14, 15) mit der Abstütznabe (18) in einer radialen Richtung zur geometrischen Achse (X),
- wenigstens eine erste Radialbewegungs-Betätigungseinrichtung (19), die funktionsmäßig in Eingriff mit der Abstütznabe (18) steht und axial bezüglich dieser bewegbar ist,
- erste Transmissionsverbindungsstangen (21), von denen jede funktionsmäßig zwischen der ersten Radialbewegungs-Betätigungseinrichtung (19) und einem der axial inneren Teile (14) eingreift, um eine Radialbewegung des einen radial inneren Teils aufgrund einer Axialbewegung herbeizuführen, die von der ersten Radialbewegungs-Betätigungseinrichtung (19) übertragen wird,
- zweite Führungselemente (17) für einen Gleiteingriff der axial äußeren Teile (15) der Halteelemente (14, 15) mit der Abstütznabe (18) in einer radialen Richtung zur geometrischen Achse (X),
- wenigstens eine zweite Radialbewegungs-Betätigungseinrichtung (20), die funktionsmäßig in Eingriff mit der Abstütznabe (18) steht und axial bezüglich dieser bewegbar ist, und
- zweite Transmissionsverbindungsstangen (22) aufweist, von denen jede funktionsmäßig zwischen die zweite Radialbewegungs-Betätigungseinrichtung (20) und einen der axial äußeren Teile (15) eingreift, um eine Radialbewegung des einen axial äußeren Teils aufgrund einer Axialbewegung herbeizuführen, die von der zweiten Radialbewegungs-Betätigungseinrichtung (20) übertragen wird.

13. Vorrichtung nach Anspruch 12, bei welcher in den radialen Sektoren (5) der ersten Hälfte (3a) und der zweiten Hälfte (3b) axial innere Treibabschnitte (14a), die von den Radialbewegungsvorrichtungen betätigt werden, und axial innere angetriebene Abschnitte (14b) vorhanden sind, die bei der Radialbewegung der axial inneren Treibabschnitte (14a) mitgezogen werden.

14. Vorrichtung nach Anspruch 1, bei welcher der ersten Hälfte (3a) und der zweiten Hälfte (3b) wenigstens eine Umklappvorrichtung (31) zugeordnet ist, um einen Seitenrand (7a, 7b) der Karkassenhülse (8) um den jeweiligen ringförmigen Verankerungsaufbau (10) umzuklappen.

15. Vorrichtung nach Anspruch 14, bei welcher jede Umklappvorrichtung (31)
- eine Vielzahl von Umklapphebeln (32), die am Umfang um die geometrische Achse (X) der Trommel (2) herum verteilt sind, und von denen jeder ein der Trommel (2) zugewandtes Druckelement (33) trägt,
- wenigstens ein Treibelement (34), das drehbar an jedem der Umklapphebel (31) an einem Gelenkpunkt (35) angreift, der von dem Druckelement (33) beabstandet ist, und
- Betätigungsvorrichtungen zur axialen Verschiebung des Treibelements (34) zwischen einer Ruhestellung, in der es sich in einem axialen Abstand von den radialen Sektoren (5) befindet, und eine Arbeitsstellung aufweist, in der es nahe bei den radialen Sektoren angeordnet ist.

16. Vorrichtung nach Anspruch 15, bei welcher der Gelenkpunkt (35) jedes der Umklapphebel (32) an dem Treibelement (34) bezogen auf die geometrische Achse (X) der Trommel (2) einen radialen Abstand hat, der kleiner ist als der radiale Abstand, der an dem entsprechenden Druckelement (33) messbar ist, wenn sich das Treibelement (34) in seiner Ruhestellung befindet.

17. Vorrichtung nach Anspruch 15, bei welchem das Halteelement (14, 15) eines jeden radialen Sektors (5) an einer axial äußeren Position eine Einführfläche (37) hat, die zu der geometrischen Achse (X) der Trommel (2) konvergiert und dem Druckelement (33) zugewandt ist, das von wenigstens einem der Umklapphebel (32) gehalten wird.

18. Vorrichtung nach Anspruch 15, bei welcher jede der Umklappvorrichtungen (31) wenigstens ein elastisches Element (36) aufweist, das sich um die geometrische Achse (X) der Trommel (2) herum erstreckt und auf den Umklapphebel (32) so arbeitet, dass auf letztere eine Radialschubwirkung zu der geometrischen Achse (X) der Trommel hin übertragen wird.

## Revendications

1. Dispositif d'assemblage de pneumatique, comprenant :
- un tambour d'assemblage (2) comportant des première (3a) et deuxième (3b) moitiés qui sont axialement opposées le long d'un axe géométrique (X) du tambour lui-même, chacune desdites moitiés (3a, 3b) comprenant une pluralité de secteurs radiaux répartis de façon circonférentielle (5) ;
- des dispositifs de déplacement radial (6) associés à chacune desdites moitiés (3a, 3b) de façon à faire effectuer une translation de façon sélective aux secteurs correspondants (5) entre une condition contractée dans laquelle ils sont disposés plus près de l'axe géométrique (X) du tambour (2) et une condition dilatée dans laquelle ils sont disposés de façon espacée par rapport à l'axe géométrique (X) du tambour (2) ;
- au moins un dispositif d'actionnement de déplacement axial (4) pour faire effectuer une translation auxdites moitiés (3a, 3b) l'une par rapport à l'autre, entre une condition d'approche dans laquelle elles sont proches l'une de l'autre et une condition espacée dans laquelle elles sont espacées l'une de l'autre le long de l'axe géométrique (X) du tambour (2) ;
chacun desdits secteurs (5) comprenant :
- un élément de maintien (14, 15) définissant un siège d'engrènement d'une structure d'ancrage annulaire avec le talon (10) qui fait partie d'un manchon de carcasse (7) fixé sur ledit tambour (2) ; et
- un élément de support (23) relié, vis-à-vis dudit élément de maintien (14, 15) dans une position axialement intérieure par rapport à ce dernier et mobile entre une première condition de fonctionnement dans laquelle il est axialement espacé de l'élément de maintien pour constituer un siège de support pour au moins une nappe qui fait partie dudit manchon de carcasse (7) et une deuxième condition de fonctionnement dans laquelle il est disposé axialement à proximité de l'élément de maintien pour permettre une approche mutuelle desdites moitiés (3a, 3b),
**caractérisé en ce que** les éléments de support (23) associés aux première (3a) et deuxième (3b) moitiés, respectivement, comportent des surfaces de butée (23a) se faisant mutuellement face et mutuellement espacées, respectivement, d'une ampleur inférieure à la course effectuée par lesdites moitiés entre leur condition espacée et leur condition d'approche, les éléments de support (23) venant en butée mutuelle par l'intermédiaire de leurs surfaces de butée respectives. (23a) dans la condition d'approche.

2. Dispositif selon la revendication 1, dans lequel ledit élément de support (23) est engrené de façon coulissante le long d'au moins une tige de guidage (24) s'étendant en porte-à-faux à partir dudit élément de maintien (14, 15).

3. Dispositif selon la revendication 2, dans lequel ladite tige de guidage (24) s'étend parallèlement à l'axe géométrique (X) du tambour d'assemblage (2).

4. Dispositif selon la revendication 1, comprenant un élément de rappel élastique (25) associé de façon opérationnelle à l'élément de support (23) pour éloigner élastiquement celui-ci de l'élément de maintien (14, 15).

5. Dispositif selon la revendication 2, comprenant au moins un ressort de rappel (25) associé à ladite tige de guidage (24) pour séparer élastiquement l'élément de support (23) de l'élément de maintien (14, 15).

6. Dispositif selon la revendication 2, dans lequel les tiges de guidage (24) des éléments de support (23) associés aux première (3a) et deuxième (3b) moitiés, respectivement, sont décalées de façon angulaire entre elles.

7. Dispositif selon la revendication 1, dans lequel les éléments de support (23) de chacune desdites moitiés (3a, 3b) sont susceptibles d'effectuer une translation vers les éléments de maintien respectifs (14, 15) après une action de poussée contre les éléments de support (23) associés à l'autre moitié durant l'approche axiale mutuelle desdites moitiés.

8. Dispositif selon la revendication 1, dans lequel les éléments de support (23) associés à chacune desdites moitiés (3a, 3b), sous une condition radialement dilatée, définissent une surface de support cylindrique sensiblement continue.

9. Dispositif selon la revendication 1, dans lequel chacun desdits éléments de support (23) comporte des fentes d'extrémité (27) renfermant de façon coulissante des saillies d'extrémité (28) présentes sur les éléments de support circonférentiellement jointifs (23).

10. Dispositif selon la revendication 1, dans lequel chacun des éléments de maintien (14, 15) comprend une partie axialement intérieure (14) et une partie axialement extérieure (15) mobiles de façon sélective et indépendante l'une de l'autre sous l'action des dispositifs de déplacement radial (6).

11. Dispositif selon la revendication 1, dans lequel lesdits dispositifs de déplacement radial (6) comprennent, pour chacune des moitiés (3a, 3b) du tambour d'assemblage (2) :
- un moyeu de support (18) coaxial à l'axe géométrique (X) du tambour (2), s'engrenant de façon coulissante avec les éléments de maintien (14, 15) des secteurs respectifs (5) dans une direction radiale par rapport audit axe géométrique (X) ;
- au moins un dispositif d'actionnement de déplacement radial (19, 20) en engrènement opérationnel avec ledit moyeu de support (18), et axialement mobile par rapport à celui-ci ;
- des tiges de liaison de transmission (21, 22) engrenées chacune de façon opérationnelle entre le dispositif d'actionnement de déplacement radial (19, 20) et l'élément de maintien (14, 15) de l'un desdits secteurs radiaux (5) de façon à produire un déplacement radial de l'élément de maintien (14, 15) après un déplacement axial transmis par ledit dispositif d'actionnement de déplacement radial (19, 20).

12. Dispositif selon la revendication 10, dans lequel lesdits dispositifs de déplacement radial (6) comprennent, pour chacune des moitiés (3a, 3b) du tambour d'assemblage (2) :
- un moyeu de support (18) coaxial à l'axe géométrique (X) du tambour (2) ;
- des premiers éléments de guidage (16) pour engrener de façon coulissante les parties axialement intérieures (14) des éléments de maintien (14, 15) avec le moyeu de support (18), dans une direction radiale par rapport audit axe géométrique (X) ;
- au moins un premier dispositif d'actionnement de déplacement radial (19) en engrènement opérationnel avec ledit moyeu de support (18), et mobile axialement par rapport à celui-ci ;
- des premières tiges de liaison de transmission (21) engrenées chacune de façon opérationnelle entre le premier dispositif d'actionnement de déplacement radial (19) et l'une desdites parties axialement intérieures (14) afin de produire un déplacement radial de ladite partie radialement intérieure après un déplacement axial transmis par ledit premier dispositif d'actionnement de déplacement radial (19);
- des deuxièmes éléments de guidage (17) pour un engrènement coulissant des parties radialement extérieures (15) des éléments de maintien (14, 15) avec le moyeu de support (18), dans une direction radiale par rapport audit axe géométrique (X) ;
- au moins un deuxième dispositif d'actionnement de déplacement radial (20) en engrènement opérationnel avec ledit moyeu de support (18), et axialement mobile par rapport à celui-ci ;
- des deuxièmes tiges de liaison de transmission (22) engrenées chacune de façon opérationnelle entre le deuxième dispositif d'actionnement de déplacement radial (20) et l'une desdites parties axialement extérieures (15) de façon à produire un déplacement radial de ladite partie axialement extérieure après un déplacement axial transmis par ledit deuxième dispositif d'actionnement de déplacement radial (20).

13. Dispositif selon la revendication 12, dans lequel, dans les secteurs radiaux (5) de chacune desdites première (3a) et deuxième (3b) moitiés, sont présentes des parties d'entraînement axialement intérieures (14a) actionnées par lesdits dispositifs de déplacement radial et des parties axialement intérieures entraînées (14) tirées le long du déplacement radial des parties d'entraînement axialement intérieures (14a).

14. Dispositif d'assemblage de pneumatique selon la revendication 1, dans lequel au moins un dispositif de retournement vers le haut (31) est associé à chacune desdites première (3a) et deuxième (3b) moitiés, de façon à retourner vers le haut un bord latéral (7a, 7b) du manchon de carcasse (8) autour de la structure d'ancrage annulaire respective (10).

15. Dispositif selon la revendication 14, dans lequel chaque dispositif de retournement vers le haut (31) comprend :
- une pluralité de leviers de retournement vers le haut (32) répartis de façon circonférentielle autour de l'axe géométrique (X) du tambour (2), portant chacun un élément de pression (33) regardant vers le tambour (2) ;
- au moins un élément d'entraînement (34) s'engrenant en rotation avec chacun desdits leviers de retournement vers le haut (32) en un point d'articulation (35) espacé dudit élément de pression (33) ;
- des dispositifs d'actionnement pour faire effectuer une translation axiale à l'élément d'entraînement (34) entre une position de repos dans laquelle il est axialement espacé des secteurs radiaux (5) et une position de travail dans laquelle il est disposé à proximité desdits secteurs radiaux.

16. Dispositif selon la revendication 15, dans lequel le point d'articulation (35) de chacun desdits leviers de retournement vers le haut (32) sur l'élément d'entraînement (34) a, par rapport à l'axe géométrique (X) du tambour (2), une distance radiale inférieure à la distance radiale mesurable sur l'élément de pression correspondant (33) lorsque l'élément d'entraînement (34) est dans sa position de repos.

17. Dispositif selon la revendication 15, dans lequel l'élément de maintien (14, 15) de chaque secteur radial (5), comporte, dans une position axialement extérieure, une surface d'amenée (37) convergeant vers l'axe géométrique (X) du tambour (2) et regardant vers l'élément de pression (33) porté par au moins l'un desdits leviers de retournement vers le haut (32).

18. Dispositif selon la revendication 15, dans lequel chaque dispositif de retournement vers le haut (31) comprend au moins un élément élastique (36) s'étendant autour de l'axe géométrique (X) du tambour (2) et agissant sur lesdits leviers de retournement vers le haut (32) de façon à transmettre à ces derniers une action de poussée radiale vers l'axe géométrique (X) du tambour lui-même.
